# EUROPEAN PATENT APPLICATION

(11) **EP 4 770 018 A1**
(43) Date of publication of application: **01.07.2026**
(21) Application number: 24874879.0
(22) Date of filing: 12.09.2024
(51) Int. Cl.: H04L 12/40, H01M 10/42

(54) **DATA PROCESSING DEVICE AND OPERATING METHOD THEREOF**

(30) Priority: 05.10.2023 KR 20230132850
(71) Applicant: LG Energy Solution, Ltd., Seoul 07335 (KR)
(72) Inventor: CHOI, Bo Bi, Daejeon 34122 (KR); YANG, Seong Yeol, Daejeon 34122 (KR); LEE, Ye Seul, Daejeon 34122 (KR)
(74) Representative: Plasseraud IP
(86) International application number: PCT/KR2024/013918
(87) International publication number: WO 2025/075321

(57) **Abstract**

A data processing device according to an embodiment disclosed herein may include a first communication circuit configured to receive first data, and a first controller is configured to receive the first data from the first communication circuit, transmit the first data to an upper-level controller, and receive second data from a second communication circuit included in another data processing device based on whether health validation data is received from a second controller included in another data processing device and determine whether to transmit the second data to the upper-level controller.

## Description

### Technical Field

### CROSS-REFERENCE TO RELATED APPLICATION

This application claims priority to and the benefit of Korean Patent Application No. 10-2023-0132850 filed in the Korean Intellectual Property Office on October 5, 2023, the entire contents of which are incorporated herein by reference.

### TECHNICAL FIELD

Embodiments disclosed herein relate to a data processing device and a method of operating the same.

### Background Art

Recently, research and development on secondary batteries has been actively conducted. Here, the secondary battery is a battery capable of charging and discharging and includes all recent lithium ion batteries in addition to conventional Ni/Cd batteries and Ni/MH batteries. Among the secondary batteries, the lithium-ion batteries have an advantage of having a much higher energy density than the conventional Ni/Cd batteries, the Ni/MH batteries, etc. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

In addition, together with the recent development of secondary battery technologies, the development of battery facility management systems for increasing the operating efficiency of secondary battery facilities and producing battery products without process defects is steadily progressing.

Therefore, the need for monitoring and managing data processing devices for collecting various pieces of data collected from battery packs or various pieces of data collected from battery facility management systems is highlighted. A data processing device may collect and process data using an IO-link protocol. Here, an IO-link system includes an IO-link master and one or more IO-link devices (e.g., a sensor or an actuator) and may perform communication using the IO-link protocol. In addition, the IO-link master may provide an interface for an upper-level controller (programmable logic controller: PLC) and control communication with connected IO-link devices.

### Disclosure

### Technical Problem

Embodiments disclosed herein are directed to providing a data processing device and a method of operating the same, which are capable of managing an operating state between data processing devices.

Embodiments disclosed herein are also directed to providing a data processing device and a method of operating the same, which are capable of managing a data processing device in a failed state and processing data instead of the data processing device in the failed state.

The technical objects of the embodiments disclosed herein are not limited to the above-described technical objects, and other objects that are not described will be able to be clearly understood by those skilled in the art from the following descriptions.

### Technical Solution

A data processing device according to an embodiment disclosed herein may include a first communication circuit configured to receive first data, and a first controller is configured to receive the first data from the first communication circuit, transmit the first data to an upper-level controller, and receive second data from a second communication circuit included in another data processing device based on whether health validation data is received from a second controller included in another data processing device and determine whether to transmit the second data to the upper-level controller.

According to an embodiment, the first controller may determine that another data processing device is in a failed state when not receiving the health validation data from the second controller.

According to an embodiment, the first controller may be configured to receive the second data from the second communication circuit, and transmit the received second data to the upper-level controller.

According to an embodiment, the first controller may be configured to receive an identification number of the second controller from the second communication circuit, and transmit the identification number of the second controller to the upper-level controller.

According to an embodiment, the first controller may receive the second data and the identification number from the second communication circuit through universal asynchronous serial receiver and transmitter (UART) communication.

A data processing method according to one embodiment disclosed herein may include receiving first data from a first communication circuit, transmitting the first data to an upper-level controller, and receiving second data from a second communication circuit included in another data processing device based on whether health validation data is received from a second controller included in another data processing device and determining whether to transmit the second data to the upper-level controller.

According to an embodiment, the data processing method may include determining that another data processing device is in a failed state when not receiving the health validation data from the second controller.

According to an embodiment, the data processing method may include receiving the second data from the second communication circuit, and transmitting the received second data to the upper-level controller.

According to an embodiment, the data processing method may include receiving an identification number of the second controller from the second communication circuit, and transmitting the identification number of the second controller to the upper-level controller.

According to an embodiment, the data processing method may include receiving the second data and the identification number from the second communication circuit through universal asynchronous serial receiver and transmitter (UART) communication.

A data processing system according to one embodiment disclosed herein may include a first data processing device including a first communication circuit configured to receive first data, and a first controller configured to receive the first data from the first communication circuit, a second data processing device including a second communication circuit configured to receive second data, and a second controller configured to receive the second data from the second communication circuit, and an upper-level controller configured to receive data from the first controller and the second controller, wherein the first controller and the second controller may mutually transmit and receive health validation data, and the first controller may receive second data from a second communication circuit based on whether health validation data is received from a second controller and determine whether to transmit the second data to the upper-level controller.

According to an embodiment, the first controller may determine that the second data processing device is in a failed state when not receiving the health validation data from the second controller.

According to an embodiment, the first controller may be configured to receive the second data from the second communication circuit, and transmit the received second data to the upper-level controller.

According to an embodiment, the first controller may be configured to receive an identification number of the second controller from the second communication circuit, and transmit the received identification number of the second controller to the upper-level controller.

According to an embodiment, the upper-level controller may receive whether the second data processing device fails from the first controller.

According to an embodiment, the upper-level controller may confirm the data processing device in a failed state and guides the failed data processing device to a user.

### Advantageous Effects

The data processing device and the method of operating the same according to the embodiments disclosed herein can manage the operating state between the data processing devices.

The data processing device and the method of operating the same according to the embodiments disclosed herein can manage the data processing device in the failed state and processing data instead of the data processing device in the failed state.

In addition, various effects that may be directly or indirectly identified through the present document can be provided.

### Description of Drawings

FIG. 1 is a block diagram showing a data processing system according to one embodiment disclosed herein.
FIG. 2 is a block diagram showing a data processing device according to one embodiment disclosed herein.
FIG. 3 is a block diagram showing data processing devices according to one embodiment disclosed herein.
FIG. 4 is a flowchart of an operation of the data processing device according to one embodiment disclosed herein.
FIG. 5 is a flowchart of an operation of the data processing device according to one embodiment disclosed herein.
FIG. 6 is a block diagram showing a hardware configuration of a computing system for performing a method of operating a data processing device according to one embodiment disclosed herein.

### Mode for Invention

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

It should be understood that various embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., by wire), wirelessly, or through a third component.

According to one embodiment, a method according to various embodiments disclosed herein may be provided by being included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through an application store or directly online between two user devices. In the case of the online distribution, at least some of the computer program products may be at least temporarily stored or temporarily generated in a device-readable storage medium such as a memory of a server of a manufacturer, a server of an application store, or a relay server.

According to various embodiments, each component (e.g., a module or a program) of the above-described components may include a single object or a plurality of objects, and some of the plurality of objects may be separately disposed in another component. According to various embodiments, one or more of the above-described corresponding components or their operations may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

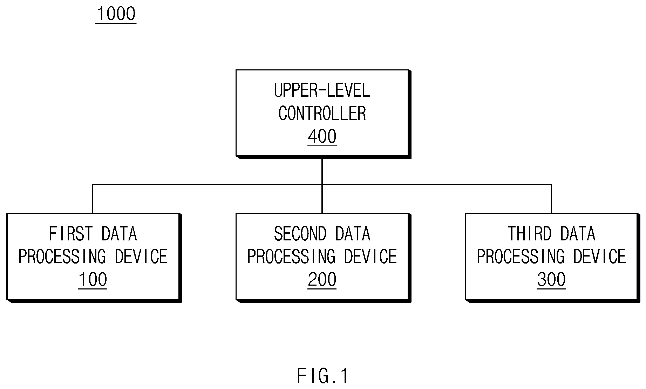

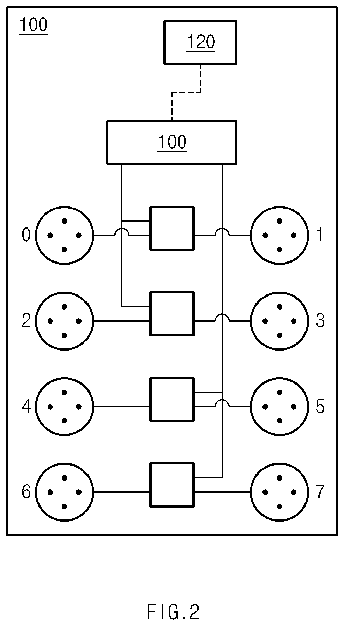

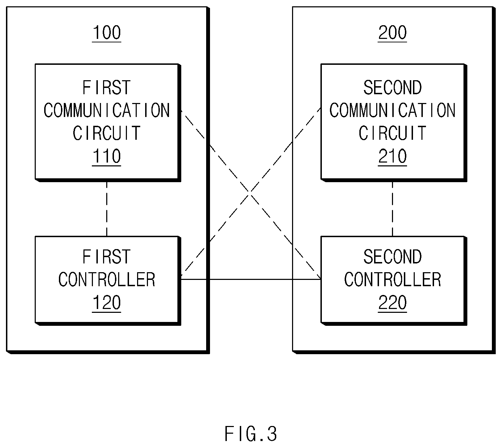

FIG. 1 is a block diagram showing a data processing system according to one embodiment disclosed herein. FIG. 2 is a block diagram showing a data processing device according to one embodiment disclosed herein. FIG. 3 is a block diagram showing data processing devices according to one embodiment disclosed herein.

Referring to FIG. 1, a data processing system 1000 may include data processing devices 100, 200, and 300 and an upper-level controller 400. According to an embodiment, the data processing devices 100, 200, and 300 may include a first data processing device 100, a second data processing device 200, and a third data processing device 300. Although FIG. 1 shows three data processing devices 100, 200, and 300, the present document is not limited thereto, and the data processing system 1000 may include n (n is a natural number of 2 or more) data processing devices. In addition, some components may be excluded from the data processing system 1000, or other general-purpose components may be further included in the data processing system 1000.

According to an embodiment, the data processing devices 100, 200, and 300 may collect, process, and/or manage data. For example, each of the data processing devices 100, 200, and 300 may collect data from another electronic device (not shown) connected to each of the data processing devices 100, 200, and 300. Here, another electronic device (not shown) may be one or more arbitrary electronic devices. For example, another electronic device (not shown) may include one or more battery process facilities or include one or more battery packs.

According to an embodiment, the data processing devices 100, 200, and 300 may be IO-link masters in an IO-link system. Here, the IO-link may be a point-to-point wired (or wireless) communication networking standard (IEC 61131-9) used to connect a sensor and an actuator to an industrial field bus type. According to an embodiment, the data processing devices 100, 200, and 300 may collect data from one or more IO-link devices. Here, the IO-link device may include a sensor or actuator included in another electronic device (not shown) connected to the data processing devices 100, 200, and 300. For example, the data processing devices 100, 200, and 300 may collect data using the IO-link protocol.

According to an embodiment, the data processing devices 100, 200, and 300 may process and/or manage the collected data. For example, each of the data processing devices 100, 200, and 300 may integrally manage pieces of data collected from one or more electronic devices. According to an embodiment, the data processing devices 100, 200, and 300 may classify and manage the pieces of data collected in a time series manner by time, date, and day of the week. In addition, the data processing devices 100, 200, and 300 may manage the sizes or formats of the collected pieces of data.

According to an embodiment, the data processing devices 100, 200, and 300 may transmit the collected pieces of data to the upper-level controller 400. Therefore, the upper-level controller 400 may manage the pieces of data collected from the data processing devices 100, 200, and 300.

Detailed description related to an operation of the first data processing device 100 may be made below with reference to FIG. 2. In FIG. 2, although only the first data processing device 100 is described for convenience of description, the description of the first data processing device 100 may be applied to the second data processing device 200 and the third data processing device 300 in the same manner.

Referring to FIG. 2, the first data processing device 100 may include a first communication circuit 110 and a first controller 120. According to an embodiment, the first data processing device 100 may further include at least one component (e.g., a memory, a display, an input device, or an output device) in addition to the components shown in FIG. 2.

According to an embodiment, the first communication circuit 110 may establish a communication channel between the first data processing device 100 and another electronic device (e.g., a battery process facility or a battery pack) and transmit and receive data with another electronic device through the established communication channel. For example, the first communication circuit 110 may receive first data D1 on another electronic device (not shown).

According to an embodiment, the first communication circuit 110 may receive data from another electronic device through IO ports 0 to 7. Here, the IO ports 0 to 7 may be ports that receives data from a sensor and/or actuator included in another electronic device. Although FIG. 2 shows eight IO ports 0 to 7, the present document is not limited thereto, and the IO ports 0 to 7 may be configured as n IO ports (n is a natural number).

According to an embodiment, when the first data processing device 100 is connected to a battery process facility (not shown), the first communication circuit 110 may receive process data. In this case, the first data D1 may include battery process data. Here, the process data may be data on process factors (e.g., a pressure, temperature, and power) acquired from the battery process facility and/or sensing data (e.g., dimensional data, thickness data, or infrared numerical data) acquired from a sensor installed in the battery process facility.

According to an embodiment, when the first data processing device 100 is connected to a battery pack (not shown), the first communication circuit 110 may receive battery data. In this case, the first data D1 may include battery data. In addition, the battery data may include data on data (e.g., a voltage, current, or temperature) acquired from a battery unit (a battery cell or a battery module) included in the battery pack. In addition, the battery data may be data (e.g., a voltage, a current, temperature, state of charge (SOC), state of health (SOH), C-rate, power, energy efficiency, or degree of aging) acquired from a battery (a battery pack, a battery rack, etc.) included in an electric vehicle (EV) or an energy storage system (ESS).

According to an embodiment, the communication channel between the first communication circuit 110 and another electronic device may be established based on a wired network and/or a wireless network. For example, the wired network may be based on local area network (LAN) communication or power line communication. In one embodiment, the wireless network may be based on a short-range communication network (e.g., Bluetooth, WiFi, or IrDA) or a telecommunication network (a cellular network, a 4G network, or a 5G network).

According to an embodiment, the first controller 120 may manage and/or control the operation of the first data processing device 100. According to an embodiment, the first controller 120 may receive data from the first communication circuit 110 and transmit the received data to the upper-level controller 400 (see FIG. 1). For example, the first controller 120 may receive the first data D1 on the first data processing device 100 from the first communication circuit 110. In addition, the first controller 120 may transmit the first data D1 to the upper-level controller 400.

Referring back to FIG. 1, the first data processing device 100 may manage and/or control an operation of another data processing device (e.g., 200 or 300). According to an embodiment, the first data processing device 100 may transmit and receive various pieces of data with another data processing device (e.g., 200 or 300) and manage the operating state of another data processing device (e.g., 200 or 300). In addition, the first data processing device 100 may transmit data to the upper-level controller 400 instead of another data processing device (e.g., 200 or 300). In addition, the second data processing device 200 and the third data processing device 300 may each manage and/or control the operation of another data processing device.

Therefore, the data processing devices 100, 200, and 300 may mutually manage operations, and when a specific data processing device is in a failed state, take over the role of another data processing device. Therefore, the data processing devices 100, 200, and 300 may efficiently maintain and manage the stability of the data processing system 1000. An embodiment in which the first data processing device 100 manages and/or controls the operation of another data processing device (e.g., 200) may be described with reference to FIG. 3.

Referring to FIG. 3, the first data processing device 100 may include the first communication circuit 110 and the first controller 120, and the second data processing device may include a second communication circuit 210 and a second controller 220.

According to an embodiment, the first communication circuit 110 and the second communication circuit 210 may each receive data from an electronic device (not shown). According to an embodiment, the first communication circuit 110 and the second communication circuit 210 may receive data from the same electronic device and receive pieces of data from different electronic devices.

According to an embodiment, the first communication circuit 110 may receive the first data D1, and the second communication circuit 210 may receive second data D2. Descriptions related to the first communication circuit 110 and the second communication circuit 210 have been made with reference to FIG. 2 and will not be repeated here.

According to an embodiment, the first controller 120 may receive the first data D1 from the first communication circuit 110. In addition, the second controller 220 may receive the second data D2 from the second communication circuit 210.

According to an embodiment, the first controller 120 may receive the first data D1 through serial communication with the first communication circuit 110. According to an embodiment, the second controller 220 may receive the second data D2 through serial communication with the second communication circuit 210.

Here, the serial communication may include a communication method of converting the form of parallel data into a serial form and transmitting the converted data. For example, the serial communication may include at least one of universal asynchronous serial receiver and transmitter (UART) communication, I-square C, that is, two-wire serial interface (TWI) (I²C) communication, and serial peripheral interface bus (SPI) communication.

According to an embodiment, the first controller 120 may transmit the first data D1 to the upper-level controller 400 (see FIG. 1). In addition, the second controller 220 may transmit the second data D2 to the upper-level controller 400 (see FIG. 1). Therefore, the first data D1 and the second data D2 may be integrally managed by the upper-level controller 400.

According to an embodiment, the first controller 120 may manage and perform the operation of the second data processing device 200 instead of the second data processing device 200. In addition, the second controller 220 may manage and perform the operation of the first data processing device 100 instead of the first data processing device 100. Therefore, the first data processing device 100 and the second data processing device 200 may mutually manage and perform the respective operations on their behalf, thereby maintaining the stability of the data processing system 1000.

According to an embodiment, the first controller 120 may transmit and receive one or more pieces of data with the second data processing device 200. Therefore, the first controller 120 may manage the second data processing device 200 based on one or more pieces of transmitted and received data. For example, the first controller 120 may transmit and receive data with the second communication circuit 210 or the second controller 220 included in the second data processing device 200.

According to an embodiment, the first data processing device 100 and the second data processing device 200 may transmit and receive one or more pieces of data. For example, the first data processing device 100 and the second data processing device 200 may transmit and receive health confirmation data H1 and H2 and transmit and receive the first and second data D1 and D2.

According to an embodiment, the health confirmation data H1 and H2 may be transmitted between a controller of any data processing device and a controller of another data processing device. Therefore, the first controller 120 and the second controller 220 of the data processing devices 100 and 200 may check whether there is a failure mutually. In contrast, according to an embodiment, the first and second data D1 and D2 may be transmitted from a communication circuit of any data processing device to a controller of another data processing device. Therefore, the first controller 120 of the data processing device 100 may process data by performing the operation of the second data processing device 200 instead of the second data processing device 200 even when the second controller 220 of the second data processing device 200 is in a failed state.

According to an embodiment, the first controller 120 and the second controller 220 may transmit and receive the health confirmation data H1 and H2. Here, the health confirmation data H1 and H2 may be data on whether the operation of the data processing device is being performed normally. For example, the health confirmation data H1 and H2 may include a heartbeat signal.

According to an embodiment, the first controller 120 and the second controller 220 may transmit the health confirmation data H1 and H2 at a predetermined time interval. For example, the first controller 120 and the second controller 220 may transmit the health confirmation data H1 and H2 using a periodic signal.

For example, the first controller 120 may transmit the health confirmation data H1 of the first data processing device 100 to the second controller 220 of the second data processing device 200 and receive the health confirmation data H2 of the second data processing device 200 from the second controller 220. In another aspect, the second controller 220 may transmit the health confirmation data H2 of the second data processing device 200 to the first controller 120 of the first data processing device 100 and receive the health confirmation data H1 of the first data processing device 100 from the first controller 120. Therefore, the first controller 120 and the second controller 220 may notify that each data processing device is operating in a normal state and confirm that another data processing device is operating in a normal state.

According to an embodiment, the first controller 120 may transmit and receive health confirmation data with a plurality of data processing devices. For example, the first controller 120 may transmit and receive health confirmation data H1, H2, and H3 with the second controller 220 of the second data processing device 200 and a third controller 320 (not shown) of the third data processing device 300 (see FIG. 1). Here, the number of data processing devices transmitting and receiving health confirmation data with the first controller 120 may be n (n is a natural number that is greater than 1). In this case, transmission and reception cycles of the health confirmation data may be the same as or different from each other.

According to an embodiment, the first controller 120 may transmit and receive the health confirmation data H1 and H2 with the second controller 220 through serial communication. Here, the serial communication may include a communication method of converting the form of parallel data into a serial form and transmitting the converted data. For example, the serial communication may include at least one of UART communication, I²C communication, and SPI communication.

According to an embodiment, the first data processing device 100 and the second data processing device 200 may mutually transmit and receive the data D1 and D2 collected from another electronic device (not shown). According to an embodiment, a controller of a specific data processing device may directly communicate with a communication circuit of another data processing device to transmit and receive data. For example, the first controller 120 of the first data processing device 100 may directly communicate with the second communication circuit 210 of the second data processing device 200 and receive the second data D2. Therefore, the first controller 120 may process the second data D2 of the second data processing device 200 at a high speed without data loss even when the second controller 220 of the second data processing device 200 is in a failed state.

In addition, in another aspect, the second controller 220 of the second data processing device 200 may directly communicate with the first communication circuit 110 of the first data processing device 100 and receive the first data D1.

According to an embodiment, the first controller 120 of the first data processing device 100 may receive the second data D2 from the second data processing device 200 based on whether the health confirmation data H2 is received from the second data processing device 200. For example, when not receiving the health confirmation data H2 from the second controller 220 of the second data processing device 200, the first controller 120 may determine that the second data processing device 200 is in a failed state.

When the first controller 120 determines that the second data processing device 200 is in a failed state, the first controller 120 may perform the operation of the second controller 220 of the second data processing device 200 instead of the second controller 220. Here, the operation of the second controller 220 may include the operation of processing the second data D2. Therefore, the first controller 120 may receive the second data D2 from the second communication circuit 210 instead of the second controller 220. In addition, the first controller 120 may transmit the second data D2 to the upper-level controller 400 instead of the second controller 220.

Therefore, the first controller 120 may manage the state and operation of the second data processing device 200. Therefore, the first data processing device 100 may transmit the second data D2 to the upper-level controller 400 instead of the second data processing device 200 even when the second data processing device 200 is in a failed state, thereby normally maintaining the data processing system 1000.

According to an embodiment, when the first controller 120 determines that the second data processing device 200 is in a failed state, the first controller 120 may transmit information about the second data processing device 200 to the upper-level controller 400. Here, the information about the second data processing device 200 may include an identification number of the second data processing device 200, an identification number of the second controller 220, etc.

According to an embodiment, the first controller 120 may receive the identification number of the second controller 220 from the second communication circuit 210. In addition, the first controller 120 may transmit the identification number to the upper-level controller 400 and notify a failed state. Therefore, the first controller 120 may notify the upper-level controller 400 of the data processing device in a failed state, thereby maintaining and/or repairing the data processing system 1000.

According to an embodiment, the first controller 120 may receive the second data D2 through serial communication with the second communication circuit 210. In another aspect, the second controller 220 may receive the first data D1 through serial communication with the first communication circuit 110.

Here, the serial communication may include a communication method of converting the form of parallel data into a serial form and transmitting the converted data. For example, the serial communication may include at least one of universal asynchronous serial receiver and transmitter (UART) communication, I-square C, that is, two-wire serial interface (TWI) (I²C) communication, and serial peripheral interface bus (SPI) communication. Therefore, the first controller 120 may receive the second data D2 through UART communication with the second communication circuit 210.

According to an embodiment, communication between the first controller 120 and the second communication circuit 210 or communication between the second controller 220 and the first communication circuit 110 may be directly connected at all times without a switching process. Therefore, even when a failure occurs in a specific data processing device, the controller of the data processing device in a normal state may instead transmit data with a simple structure through direct communication between the communication circuit and the controller. Therefore, a response to a failed state may be quickly made in the data processing system 1000.

According to an embodiment, the first controller 120 may be connected to a communication circuit of each of a plurality of data processing devices to transmit and receive data. For example, the first controller 120 may receive the second data D2 and third data D3 from the second communication circuit 210 of the second data processing device 200 and the third communication circuit 310 (not shown) of the third data processing device 300 (see FIG. 1). Here, the number of communication circuits connected to the first controller 120 may be n (n is a natural number that is greater than 1).

Referring back to FIG. 1, the upper-level controller 400 may control and/or manage the first data processing device 100, the second data processing device 200, and the third data processing device 300.

According to an embodiment, the upper-level controller 400 may transmit and receive data with the data processing devices 100, 200, and 300. For example, the upper-level controller 400 may receive data from the data processing devices 100, 200, and 300. According to an embodiment, the upper-level controller 400 may receive data from the controller included in each of the first data processing device 100, the second data processing device 200, and the third data processing device 300. Here, the data may include the health confirmation data H1 and H2 or the first to third data D1 to D3.

According to an embodiment, the upper-level controller 400 may communicate with the first data processing device 100, the second data processing device 200, and the third data processing device 300 via a field bus. Here, the field bus may be a bidirectional digital communication method for control between a programmable logic controller (PLC) and other devices. For example, the upper-level controller 400 may be a PLC.

According to an embodiment, the upper-level controller 400 may manage and/or control the states and/or operations of the data processing devices 100, 200, and 300. For example, the upper-level controller 400 may receive whether the data processing devices 100, 200, and 300 are in a failed state from the controllers of the data processing devices 100, 200, and 300.

According to an embodiment, the upper-level controller 400 may receive whether another data processing device (e.g., 200 or 300) is in a failed state from the data processing device (e.g., 100). For example, when the second data processing device 200 is in a failed state, the second controller 220 of the second data processing device 200 may not normally operate, and thus the second controller 220 may not transmit its failed state and the second battery data D2 to the upper-level controller 400. In this case, the controller 120 of the first data processing device 100 in a normal state may transmit whether the second data processing device 200 is in a failed state and the second battery data D2 to the upper-level controller 400 instead of the second controller 220. Therefore, the upper-level controller 400 may receive whether the second data processing device 200 is in a failed state from the first data processing device 100 in a normal state and confirm that the second data processing device 200 is in a failed state.

According to an embodiment, the upper-level controller 400 may confirm the data processing device in a failed state and guide the failed data processing device to a user. For example, the upper-level controller 400 may check which data processing device is in a failed state based on the identification number of the data processing device in which a failure has occurred. The upper-level controller 400 may confirm information about position information, failure type information, and specification information of the data processing device through the identification number.

According to an embodiment, the upper-level controller 400 may provide information about the data processing device in a failed state to the user. For example, the upper-level controller 400 may guide at least one of the identification number of the data processing device in which a failure has occurred, and position information, failure type information, and specification information of the data processing device. According to an embodiment, the upper-level controller 400 may provide information about an abnormal data processing device to a user device (a terminal, a PC, etc.) through a communication unit (not shown) and also provide information about an abnormal data processing device through a display provided in a vehicle, a charger, etc.

Therefore, the user may quickly identify and repair the data processing device in a failed state. Therefore, the user may quickly maintain and repair the data processing system 1000.

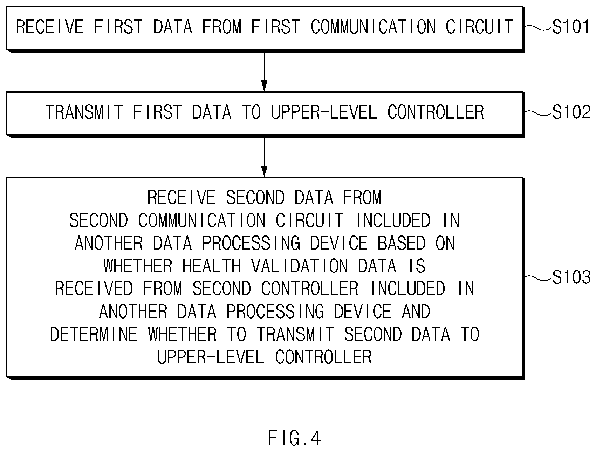

FIG. 4 is a flowchart of an operation of the data processing device according to one embodiment disclosed herein.

Referring to FIG. 4, the operation of the first data processing device 100 may include receiving first data from a first communication circuit (S101), transmitting the first data to an upper-level controller (S102), and receiving second data from a second communication circuit included in another data processing device based on whether health confirmation data is received from a second controller included in another data processing device and determining whether to transmit the second data to the upper-level controller (S103).

In operation S101, the first controller 120 of the first data processing device 100 may receive the first data D1 from the first communication circuit 110 (S101).

In operation S102, the first controller 120 may transmit the first data D1 to the upper-level controller 400 (S102).

In operation S103, the first controller 120 may receive the second data D2 from the second communication circuit 210 included in another data processing device 200 based on whether the health confirmation data H2 is received from the second controller 220 included in another data processing device (e.g., 200) and determine whether to transmit the second data D2 to the upper-level controller 400 (S103). Here, the first controller 120 may receive the second data D2 directly from the second communication circuit 210.

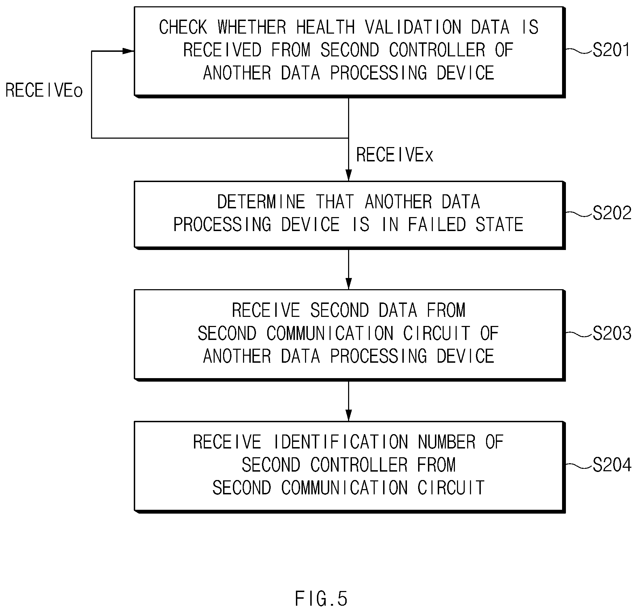

FIG. 5 is a flowchart of an operation of the data processing device according to one embodiment disclosed herein.

Referring to FIG. 5, the operation of the first data processing device 100 may include checking whether health confirmation data is received from a second controller of another data processing device (S201), determining that another data processing device is in a failed state when the health confirmation data is not received from the second controller (S202), receiving the second data from a second communication circuit of another data processing device (S203), and receiving an identification number of the second controller from the second communication circuit (S204).

In operation S201, the first controller 120 of the first data processing device 100 may check whether the health confirmation data H2 is received from the second controller 220 of another data processing device (e.g., 200) (S201). According to an embodiment, when the first controller 120 receives the health confirmation data H2, the first controller 120 may determine that another data processing device 200 is in a normal state. Therefore, the first controller 120 may check whether the health confirmation data H2 is received from the second controller 220 at a predetermined time interval.

In operation S202, when the first controller 120 may not receive the health confirmation data H2 from the second controller 220, the first controller 120 may determine that another data processing device 200 is in a failed state (S202).

In operation S203, the first controller 120 may receive the second data D2 from the second communication circuit 210 of another data processing device 200 (S203).

In operation S204, the first controller 120 may receive the identification number of the second controller 220 from the second communication circuit 210 (S204). According to an embodiment, the first controller 120 may perform operations S203 and S204 simultaneously and perform the same in a reverse order.

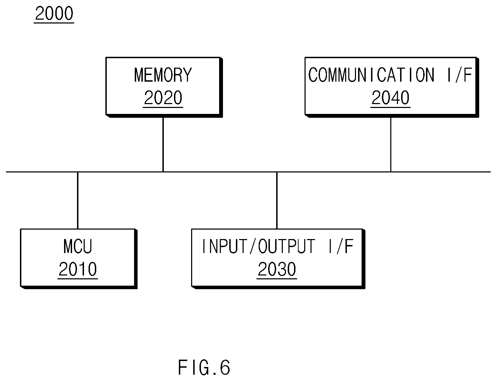

FIG. 6 is a block diagram showing a hardware configuration of a computing system for performing a method of operating a data processing device according to one embodiment disclosed herein.

Referring to FIG. 6, a computing system 2000 according to one embodiment disclosed in this document may include a micro controller unit (MCU) 2010, a memory 2020, an input/output I/F 2030, and a communication I/F 2040.

The MCU 2010 may execute various programs (e.g., a data collection program, a health confirmation data generation and confirmation program, and a communication program) stored in the memory 2020. In addition, the MCU 2010 may be a processor for processing various pieces of information including data collected through these programs and state information of the data processing device and performing functions of the controller 120, 220, and 320 included in the data processing devices 100, 200, and 300 shown in FIGS. 1 to 5.

The memory 2020 may store various programs such as a data collection program, a health confirmation data generation and confirmation program, and a communication program. In addition, the memory 2020 may store various pieces of information including collected data and state information of the data processing device.

A plurality of memories 2020 may be provided as needed. The memory 2020 may be a volatile memory or a non-volatile memory. As the memory 2020 of the volatile memory, a RAM, a DRAM, a SRAM, or the like can be used. As the memory 2020 of the non-volatile memory, a ROM, a PROM, an EAROM, an EPROM, an EEPROM, a flash memory, or the like can be used. Examples of the above-listed memories 2020 are merely illustrative and are not limited to these examples.

The input/output I/F 2030 may be an interface for connecting an input device (not shown), such as a keyboard, a mouse, or a touch panel, and an output device, such as a display (not shown) with the MCU 2010 and allowing the input and output devices and the MCU 4610 to transmit and receive data.

The communication I/F 2040 is a component capable of transmitting and receiving various data to and from the server and may be various devices capable of supporting wired or wireless communication. For example, the data processing devices 100, 200, and 300 may transmit and receive various pieces of information including an SOC, open circuit voltage (OCV), parameters, etc. of the battery cell from a separately provided external server through the communication I/F 2040.

As described above, the computer program according to one embodiment disclosed herein may be implemented as a module for performing the functions shown in FIG. 3, for example, by being recorded in the memory 2020 and processed by the MCU 2010.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above-described disclosure schematically describes the features of several embodiments so that those skilled in the art may better understand the aspects of the present disclosure. Those skilled in the art will readily appreciate that the present disclosure may be used as a basis for designing or modifying other structures to perform the same purpose or achieve the same advantage of the embodiments introduced herein. Furthermore, those skilled in the art will recognize that such equivalent configurations do not depart from the scope of the present disclosure, and various changes, substitutions, and modifications can be made herein without departing from the scope of the present disclosure.

### [DESCRIPTION OF REFERENCE NUMERALS]

100: first data processing device
110: first communication circuit
120: first controller
200: second data processing device
210: second communication circuit
220: second controller
300: third data processing device
310: third communication circuit
320: third controller
400: upper-level controller
1000: data processing system
2000: computing system
2010: MCU
2020: memory
2030: input/output I/F
2040: communication I/F
H1, H2: health confirmation data
D1, D2, D3: first, second, third data

## Claims

1. A data processing device comprising:
a first communication circuit configured to receive first data; and
a first controller is configured to:
receive the first data from the first communication circuit;
transmit the first data to an upper-level controller; and
receive second data from a second communication circuit included in another data processing device based on whether health validation data is received from a second controller included in another data processing device and determine whether to transmit the second data to the upper-level controller.

2. The data processing device of claim 1, wherein the first controller determines that another data processing device is in a failed state when not receiving the health validation data from the second controller.

3. The data processing device of claim 2, wherein the first controller is configured to:
receive the second data from the second communication circuit; and
transmit the received second data to the upper-level controller.

4. The data processing device of claim 3, wherein the first controller is configured to:
receive an identification number of the second controller from the second communication circuit; and
transmit the identification number of the second controller to the upper-level controller.

5. The data processing device of claim 4, wherein the first controller receives the second data and the identification number from the second communication circuit through universal asynchronous serial receiver and transmitter (UART) communication.

6. A data processing method comprising:
receiving first data from a first communication circuit;
transmitting the first data to an upper-level controller; and
receiving second data from a second communication circuit included in another data processing device based on whether health validation data is received from a second controller included in another data processing device and determining whether to transmit the second data to the upper-level controller.

7. The data processing method of claim 6, comprising determining that another data processing device is in a failed state when not receiving the health validation data from the second controller.

8. The data processing method of claim 7, comprising:
receiving the second data from the second communication circuit; and
transmitting the received second data to the upper-level controller.

9. The data processing method of claim 8, comprising:
receiving an identification number of the second controller from the second communication circuit; and
transmitting the identification number of the second controller to the upper-level controller.

10. The data processing method of claim 9, comprising receiving the second data and the identification number from the second communication circuit through universal asynchronous serial receiver and transmitter (UART) communication.

11. A data processing system comprising:
a first data processing device including a first communication circuit configured to receive first data, and a first controller configured to receive the first data from the first communication circuit;
a second data processing device including a second communication circuit configured to receive second data, and a second controller configured to receive the second data from the second communication circuit; and
an upper-level controller configured to receive data from the first controller and the second controller,
wherein the first controller and the second controller mutually transmit and receive health validation data, and
the first controller receives second data from a second communication circuit based on whether health validation data is received from a second controller and determines whether to transmit the second data to the upper-level controller.

12. The data processing system of claim 11, wherein the first controller determines that the second data processing device is in a failed state when not receiving the health validation data from the second controller.

13. The data processing system of claim 12, wherein the first controller is configured to:
receive the second data from the second communication circuit; and
transmit the received second data to the upper-level controller.

14. The data processing system of claim 13, wherein the first controller is configured to:
receive an identification number of the second controller from the second communication circuit; and
transmit the received identification number of the second controller to the upper-level controller.

15. The data processing system of claim 12, wherein the upper-level controller receives whether the second data processing device fails from the first controller.

16. The data processing system of claim 12, wherein the upper-level controller confirms the data processing device in a failed state and guides the faile d data processing device to a user.
